# EUROPEAN PATENT APPLICATION

(11) **EP 4 622 053 A1**
(43) Date of publication of application: **24.09.2025**
(21) Application number: 23890792.7
(22) Date of filing: 14.11.2023
(51) Int. Cl.: H02J 7/34, H02J 7/00, B60R 16/033

(54) **ENERGY REGULATION SYSTEM**

(30) Priority: 15.11.2022 CN 202211423966
(71) Applicant: Team Young Technology Co., Ltd., 32070 Taoyuan City (TW)
(72) Inventor: WANG, Dy-Cheng, Taoyuan City (TW); LIN, Tz-Min, Taoyuan City (TW)
(74) Representative: Becker, Eberhard
(86) International application number: PCT/CN2023/131655
(87) International publication number: WO 2024/104359

(57) **Abstract**

The present invention provides an energy regulation system, which is electrically connected to a power supply, a load and a first energy storage device of a lithium battery structure. The energy regulation system comprises a second energy storage device, at least one converter and a controller, wherein the second energy storage device is of a capacitor structure and is electrically connected to the power supply or the load; the converter is electrically connected between the first energy storage device and the second energy storage device, and transmits an output voltage and an output current; the controller is used for measuring a first voltage value and a first current value of the first energy storage device, or a second voltage value of the second energy storage device, and when the second voltage value of the second energy storage device is smaller than a reference voltage value, using the first energy storage device as a power source to charge the second energy storage device to the reference voltage value. The controller controls the converter to transmit the output voltage and the output current.

## Description

### Field of the Invention

The invention relates to a storage system, and in particular to an energy regulation system.

### Description of Related Art

The main concept of the power grid is to integrate the load and the power source into one controllable energy storage system to supply electricity to users. At present, with the increasing number of renewable energy devices, the price competitiveness of green electricity is gradually increased. However, the intermittent nature of green energy requires energy storage systems to store excess electricity in order to smoothly dispatch electricity and ensure grid stability and output smoothness. The Power Conditioning System (PCS) is connected to the power grid and is used to regulate the power of the power grid. In addition to emergency backup power, the PCS may also solve the issue of unstable renewable energy and low-frequency power outages caused by low frequency, and at the same time may also store renewable energy for peak shaving and valley filling. As traditional power systems are to face instability caused by the integration of a large amount of renewable energy into the power grid, power companies have introduced energy storage automatic frequency control (hereinafter referred to as AFC) frequency modulation services. By taking advantage of the fast charging and discharging characteristics of energy storage systems, the frequency of the power system is regulated by actively adjusting the charging and discharging actions to help maintain the frequency drift caused by load fluctuations in the power system, and is extremely suitable as a system stability response solution under high renewable energy consumption. The actual use thereof is to absorb or supplement short-term overload and underload on the power grid. It has the functions of peak shaving and valley filling, frequency adjustment, and rapid regulation of electric energy in the power grid system, and energy transfer or storage of electric energy output from renewable energy to provide diversified functions such as dispatching, real and virtual power regulation and rapid response characteristics between client loads and renewable energy power generation facilities to the power grid, and provide different services such as smoothing the output of renewable energy, adjusting the power grid frequency, and backup power source to help the power grid achieve the object of stable power source. Due to the short service life of lead-acid batteries, most energy storage systems adopt lithium batteries or lithium iron batteries. In theory, the service life of lithium batteries or lithium iron batteries may be extended by several magnitudes. However, lithium batteries or lithium iron batteries need to absorb or supplement the overload and the underload of the power grid or the instantaneous inrush current during startup and charging and discharging, and need to perform large charging and discharging currents of about 2.0 C or more and small frequent charging and discharging currents of about 1.0 C or less, thus affecting or consuming the service life of lithium batteries or lithium iron batteries. Based on the standard that lithium batteries or lithium iron batteries need to be replaced when the maximum power stored is less than or equal to 70%, the service life of lithium batteries or lithium iron batteries is less than 5 years.

Electric motorcycles or electric vehicles use lithium batteries or lithium iron batteries having fast charging and discharging characteristics as energy storage systems to store braking or low-speed kinetic energy recovery system electricity or supply power to electric motors or electrical devices of electric vehicles. Since lithium batteries or lithium iron batteries need to store or supply electric vehicle power overload and underload or instantaneous inrush of power during startup and kinetic energy recovery, lithium batteries or lithium iron batteries need to perform large charging and discharging currents of approximately greater than or equal to 2.0 C and small frequent charging and discharging currents of approximately less than or equal to 1.0 C, thus affecting or consuming the service life of the lithium batteries or the lithium iron batteries. Based on the standard that lithium batteries or lithium iron batteries need to be replaced when the maximum power stored is less than or equal to 70%, the service life of lithium batteries or lithium iron batteries is less than 5 years.

### SUMMARY OF THE INVENTION

In view of the above shortcomings and to achieve the above improvement objects, an energy regulation system disclosed in the invention is electrically connected to a power source, a load, and a first energy storage device of a lithium battery structure. The energy regulation system includes: a second energy storage device of a capacitor structure is electrically connected to the power source or the load, wherein in an energy storage mode, the power source is used as a power source to charge the second energy storage device, or charge the first energy storage device via the second energy storage device, and in an energy transfer mode, the first energy storage device is used as the power source to charge the second energy storage device, or to discharge to the load via the second energy storage device; at least one converter electrically connected between the first energy storage device and the second energy storage device, transmitting an output voltage and an output current in the energy storage mode or the energy transfer mode; and a controller used to detect a first voltage value and a first current value of the first energy storage device, or a second voltage value of the second energy storage device, wherein the second energy storage device respectively sets a second upper limit voltage value, a second lower limit voltage value, and a reference voltage value, the reference voltage value is between the second upper limit voltage value and the second lower limit voltage value, when the second voltage value of the second energy storage device is less than the reference voltage value, the first energy storage device is used as the power source to charge the second energy storage device to the reference voltage value, and the controller controls the converter to transmit the output voltage and the output current to avoid large current charging or discharging of the first energy storage device, thereby achieving an object of protecting the first energy storage device.

In order to achieve the above object, the invention discloses an energy regulation system, wherein the load is a power regulation system, an electric motor, or an electrical device.

In order to achieve the above object, the invention discloses an energy regulation system, wherein the power source is a power regulation system, a generator, or a kinetic energy recovery system.

In order to achieve the above object, in the energy regulation system disclosed in the invention, the reference voltage value is a rated working voltage value of the load.

In order to achieve the above object, in the energy regulation system disclosed in the invention, the reference voltage value is greater than or equal to a lower limit working voltage value of the load and less than or equal to an upper limit working voltage value of the load.

In order to achieve the above object, in the energy regulation system disclosed in the invention, the second upper limit voltage value is an upper limit working voltage value of the load minus a margin value, the second lower limit voltage value is a lower limit working voltage value of the load plus the margin value, and the margin value is any value greater than or equal to zero.

In order to achieve the above object, in the energy regulation system disclosed in the invention, when the power source charges the second energy storage device, when the controller detects that the second voltage value of the second energy storage device exceeds an upper middle limit voltage value between the reference voltage value and the second upper limit voltage, the controller adjusts the converter to allow the power source to charge the first energy storage device via the second energy storage device.

In order to achieve the above object, in the energy regulation system disclosed in the invention, the reference voltage value and the second upper limit voltage value are added and a result thereof is divided by 2 to obtain the upper middle limit voltage value.

In order to achieve the above object, in the energy regulation system disclosed in the invention, when the power source charges the second energy storage device or charges the first energy storage device via the second energy storage device, the charging current is between 0 C and 1.0 C until the first current value of the first energy storage device reaches a first lower limit current value.

In order to achieve the above object, in the energy regulation system disclosed in the invention, the second energy storage device includes a reserved energy storage area to provide energy storage needs for an instantaneous overload of the load, and a pre-stored energy area to provide power source needs for an instantaneous underload of the load, thereby avoiding large current charging or discharging of the first energy storage device and extending a service life of the first energy storage device.

In order to achieve the above object, in the energy regulation system disclosed in the invention, during a wake-up stage of a power saving mode, the controller detects that the second voltage value of the second energy storage device is lower than the second lower limit voltage value or the lower middle limit voltage value between the reference voltage value and the second lower limit voltage value, and enters the energy transfer mode, and the controller controls the converter to allow the first energy storage device to charge the second energy storage device.

In order to achieve the above object, in the energy regulation system disclosed in the invention, the reference voltage value and the second lower limit voltage value are added and a result thereof is divided by 2 to obtain the lower middle limit voltage value.

In order to achieve the above object, in the energy regulation system disclosed in the invention, the first energy storage device charges the second energy storage device at a charging current between 0 C and 2.0 C until the second voltage value of the second energy storage device reaches the reference voltage value.

The detailed structure, characteristics, assembly or use of the energy regulation system disclosed in the invention are described in the detailed description of the subsequent implementation methods. However, those skilled in the art should understand that the detailed description and the specific embodiments of the invention are only used to illustrate the invention and are not intended to limit the claims of the invention.

### BRIEF DESCRIPTION OF THE DRAWINGS

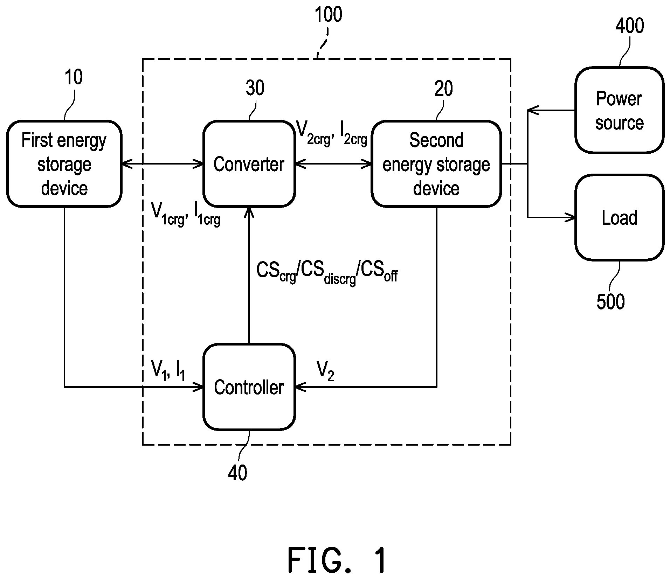

FIG. 1 is a schematic diagram of an energy regulation system.

### Description of Reference Numerals

10: first energy storage device;
20: second energy storage device;
30: converter;
40: controller;
100: energy regulation system;
400: power source;
500: load.

### DESCRIPTION OF THE EMBODIMENTS

Below, corresponding preferred embodiments are listed in conjunction with the accompanying drawing to illustrate the constituent components, steps, and effects achieved by the energy regulation system disclosed in the invention. However, the components, dimensions, and appearance of the energy regulation system in the accompanying drawing are only used to illustrate the technical features of the invention, and do not constitute a limitation to the invention.

In addition, the words "include", "comprise", "have", "contain", etc. used in this article are open terms, meaning "including but not limited to". In addition, "and/or" used in this article includes any and all combinations of one or a plurality of items in the relevant listed items.

Referring to the schematic diagram of an energy regulation system 100 shown in FIG. 1, the energy regulation system 100 disclosed in the invention provides a combination structure of a second energy storage device 20 of a capacitor structure, a converter 30, and a controller 40. The energy regulation system 100 is electrically connected to a power source 400, a load 500, and a first energy storage device 10 of a lithium battery structure. In particular, the first energy storage device 10 of the lithium battery structure includes any or a combination of a lithium (iron) battery, a ternary lithium battery, etc., the second energy storage device 20 of the capacitor structure includes any or a combination of a supercapacitor, a supercapacitor set, a capacitor set, etc., and the second energy storage device 20 of the capacitor structure is electrically connected to the power source 400 or the load 500. The power source 400 or the load 500 is connected to the converter 30 via the second energy storage device 20 of the capacitor structure and then connected to the first energy storage device 10 of the lithium battery structure. When the power source 400 is supplying power, that is, in an energy storage mode, the power source 400 is used as a power source to charge the second energy storage device 20 of the capacitor structure, or the controller 40 controls the converter 30 to transmit an output voltage V_{1crg} and an output current I_{1crg}, so that the power source 400 charges the first energy storage device 10 of the lithium battery structure via the second energy storage device 20 of the capacitor structure and the converter 30. The first energy storage device 10 of the lithium battery structure is used to store electricity. That is, the electric energy transmitted by the power source 400 may be recharged to the first energy storage device 10 of the lithium battery structure via the converter 30, and the surge generated by the power source 400 or the load 500, as well as the instantaneous overload or underload, are stored or supplied by the second energy storage device 20 of the capacitor structure. When the second energy storage device 20 of the capacitor structure is out of power or needs to supply power to the load 500, that is, in an energy transfer mode, the first energy storage device 10 of the lithium battery structure is used as a power source, and the controller 40 controls the converter 30 to transmit an output voltage V_{2crg} and an output current I_{2crg}, allowing the first energy storage device 10 of the lithium battery structure to charge the second energy storage device 20 of the capacitor structure, or the load 500 uses the first energy storage device 10 of the lithium battery structure and the second energy storage device 20 of the capacitor structure as power supply sources, allowing the first energy storage device 10 of the lithium battery structure to discharge to the load 500 via the second energy storage device 20 of the capacitor structure. The first energy storage device 10 of the lithium battery structure provides the power required by the second energy storage device 20 of the capacitor structure due to self-consumption loss or due to supply power to the load 500.

The controller 40 of the energy regulation system 100 measures a first voltage value V₁ and a first current value I₁ of the first energy storage device 10 of the lithium battery structure, or a second voltage value V₂ of the second energy storage device 20 of the capacitor structure, via a voltage meter (not shown) and a current meter (not shown). In particular, the second energy storage device 20 of the capacitor structure respectively sets a second upper limit voltage value V₂ₘₐₓ, a second lower limit voltage value V₂ₘᵢₙ, and a reference voltage value V_{R}. The second upper limit voltage value V₂ₘₐₓ is preferably set to an upper limit working voltage value of the load 500, and the second lower limit voltage value V₂ₘᵢₙ is preferably set to a lower limit working voltage value of the load 500. A margin value may also be reserved. The margin value is any value greater than or equal to zero, the second upper limit voltage value V₂ₘₐₓ is set to the upper limit working voltage value of the load 500 minus the margin value, and the second lower limit voltage value V₂ₘᵢₙ is set to the lower limit working voltage value of the load 500 plus the margin value, but the invention is not limited thereto. The reference voltage value V_{R} is between the second upper voltage value V₂ₘₐₓ and the second lower voltage value V₂ₘᵢₙ, wherein the first voltage value V₁ and the first current value I₁ of the first energy storage device 10 of the lithium battery structure and the second voltage value V₂ of the second energy storage device 20 of the capacitor structure are provided to the controller 40 respectively. The controller 40 regulates the output voltage and the output current of the converter 30 so that the second voltage value V₂ of the second energy storage device 20 of the capacitor structure is maintained at the reference voltage value V_{R} for charging or discharging, thereby avoiding large current charging or discharging of the first energy storage device 10 of the lithium battery structure, thereby achieving the object of protecting the first energy storage device 10 of the lithium battery structure.

The converter 30 of the energy regulation system 100 includes a shutdown state, a charging control state, and a discharging control state. The shutdown state means that the converter 30 does not perform charging or discharging operations. The charging control state means that the power source 400 is connected to the converter 30 via the second energy storage device 20 of the capacitor structure to charge the first energy storage device 10 of the lithium battery structure. The discharging control state means that the first energy storage device 10 of the lithium battery structure charges the second energy storage device 20 of the capacitor structure via the converter 30. The controller 40 controls the converter 30 to switch between the shutdown state, the charging control state, and the discharging control state according to at least one electrical characteristic of the first energy storage device 10 of the lithium battery structure or the second energy storage device 20 of the capacitor structure detected.

The above describes the composition of the energy regulating system 100 of the invention. Subsequently, the operation and the function of the energy regulating system 100 of the invention are described in detail.

Referring to the first embodiment shown in FIG. 1, taking a power grid as an example, the invention provides the energy regulation system 100 for a power grid, wherein the first energy storage device 10 of the lithium battery structure includes any of a lithium (iron) battery, a ternary lithium battery, etc., or a combination thereof, and the first energy storage device 10 of the lithium battery structure is formed by n lithium batteries connected in series and parallel, wherein n is greater than or equal to 1, and the second energy storage device 20 of the capacitor structure includes any of a supercapacitor, a supercapacitor set, a capacitor set, etc., or a combination thereof. The second energy storage device 20 of the capacitor structure is formed by m supercapacitors connected in series and in parallel, wherein m is greater than or equal to 1, the power source 400 is a power regulation system of the power grid or a renewable energy source or a generator, etc., and the load 500 is a power regulation system of the power grid or an electrical device for user loads. When the power grid is supplying power or is instantaneously underloaded, i.e., in the energy storage mode, the controller 40 provides the converter 30 with a control signal CS_{crg} corresponding to the charging control state, the second energy storage device 20 of the capacitor structure is electrically connected to the power regulation system of the power grid, and the power regulation system of the power grid is used as a power source to charge the second energy storage device 20 of the capacitor structure. Alternatively, the controller 40 controls the converter 30 to transmit the output voltage V_{1crg} and the output current I_{1crg}, and the power regulation system of the power grid is connected to the converter 30 via the second energy storage device 20 of the capacitor structure to charge the first energy storage device 10 of the lithium battery structure. The first energy storage device 10 of the lithium battery structure is used to store electricity, that is, the electric energy output by the power regulation system of the power grid may be recharged to the first energy storage device 10 of the lithium battery structure via the converter 30. When the power grid is short of power or has an instantaneous overload, that is, in the energy transfer mode, the controller 40 controls the converter 30 to switch to the discharge control state CS_{discrg}, and uses the first energy storage device 10 of the lithium battery structure as the power source. The controller 40 controls the converter 30 to transmit the output voltage V_{2crg} and the output current I_{2crg}. The controller 40 regulates the converter 30 to allow the first energy storage device 10 of the lithium battery structure to charge the second energy storage device 20 of the capacitor structure, or uses the first energy storage device 10 of the lithium battery structure and the second energy storage device 20 of the capacitor structure as power supply sources, allowing the first energy storage device 10 of the lithium battery structure to be connected to the second energy storage device 20 of the capacitor structure via the converter 30 to discharge to the power regulation system or the electrical device of the power grid. The first energy storage device 10 of the lithium battery structure provides the second energy storage device 20 of the capacitor structure with power loss caused by self-consumption or the power source power regulation system or the electrical device of the power grid. The occasional instantaneous voltage jump of the power grid power regulation system is absorbed or supplemented by the second energy storage device 20 of the capacitor structure to stabilize the power source quality of the power grid.

In the first embodiment, taking the power grid as an example, the first energy storage device 10 of the lithium battery structure is formed by electrically parallel connected 6 sets of 15 lithium battery units connected in series. The series and parallel connection of the plurality of lithium battery units forming the first energy storage device 10 of the lithium battery structure is only an embodiment of the invention, and is not a limitation of the scope of the invention. The first energy storage device 10 of the lithium battery structure of the invention may be any of a lithium (iron) battery, a ternary lithium battery, etc., or a series and/or parallel combination thereof. In the present embodiment, the capacity of the lithium battery cell is 6.0 Ahr (ampere-hour), the charge cut-off voltage is 3.6 V, the rated voltage is 3.2 V, and the discharge cut-off voltage is 3 V. Therefore, the charging cut-off voltage value of the first energy storage device 10 of the lithium battery structure is 3.6 V × 15 = 54 V, the rated voltage value of the first energy storage device 10 of the lithium battery structure is 3.2 V × 15 = 48 V, the discharge cut-off voltage value of the first energy storage device 10 of the lithium battery structure is 2.8 V × 15 = 42 V, and the battery capacity of the first energy storage device 10 of the lithium battery structure is 6.0 Ahr (ampere-hour) × 6 = 36 Ahr (ampere-hour). At present, the capacity of supercapacitor units may be very large, ranging from a few farads to thousands of farads or even ten thousand farads, but the voltage of a single unit is relatively low. The second energy storage device 20 of the capacitor structure takes a supercapacitor set formed by 20 supercapacitor units of 450F (Farad) electrically connected in series as an example. The rated voltage of the supercapacitor unit is 3.0 V, and the rated voltage of the supercapacitor set is 3.0 V × 20 = 60 V. The working voltage range of the power regulation system of the power grid is between 40 V and 54 V. Taking the rated working voltage as 42 V as an example, the second upper limit voltage value V₂ₘₐₓ of the supercapacitor set is set to 54 V, and the second lower limit voltage value V₂ₘᵢₙ of the supercapacitor set is set to 40 V. In a floating charge mode, the reference voltage value V_{R} of the second energy storage device 20 is greater than or equal to the lower limit working voltage value of the load 500 and less than or equal to the upper limit working voltage value of the load 500. Alternatively, the reference voltage value V_{R} is the rated working voltage value of the load 500. In the first embodiment, the load 500 is a rated working voltage value of 42 V of the power grid power regulation system as an example, as the reference voltage value V_{R} of the supercapacitor set, that is, the floating charge voltage value. When the controller 40 detects that the second voltage value V₂ of the second energy storage device 20 is lower than the reference voltage value V_{R}, the controller 40 enters the energy transfer mode. The controller 40 controls the converter 30 to allow the first energy storage device 10 to charge the second energy storage device 20 until the second voltage value V₂ of the second energy storage device 20 reaches the reference voltage value V_{R}.

To further explain the specific operation of the first embodiment, the energy regulation system 100 of the invention may not only protect the first energy storage device 10 of the lithium battery structure from the load 500 or the power source 400 switching on and off or charging and discharging surges, but also design an appropriate capacity of the second energy storage device 20 of the capacitor structure. Moreover, in the floating charge mode, the reference voltage V_{R} between the second upper voltage limit V₂ₘₐₓ and the second lower voltage limit V₂ₘᵢₙ of the second energy storage device 20 of the capacitor structure is used for floating charge, and the reserved energy storage area between the reference voltage V_{R} and the second upper voltage limit V₂ₘₐₓ is used as the second energy storage device 20 of the capacitor structure to store instantaneous charging power, so as to absorb the instantaneous inrush or the overload power transmitted by, for example, the power regulation system of the power grid or the renewable energy or the generator. At the same time, the energy stored in the pre-stored energy area between the reference voltage value V_{R} and the second lower voltage value V₂ₘᵢₙ may be used as the second energy storage device 20 of the capacitor structure to provide instantaneous discharge power demand to supplement the instantaneous underload power of the power regulation system of the power grid. Moreover, since most of the instantaneous overload power of the power regulation system of the power grid is absorbed and stored by the second energy storage device 20 of the capacitor structure, and then the electric energy is supplemented back to the power regulation system of the power grid, when the second energy storage device 20 of the capacitor structure stores the recovered power of the power source 400 on the power grid, the power regulation system or the renewable energy or the generator of the power grid or the like is used as the power source to charge the second energy storage device 20 of the capacitor structure, and the controller 40 detects that the second voltage value V₂ of the second energy storage device 20 of the capacitor structure exceeds an upper middle limit voltage value between the reference voltage value V_{R} and the second upper limit voltage value V₂ₘₐₓ. In particular, the upper middle limit voltage value may be set by adding the reference voltage value V_{R} and the second upper limit voltage value V₂ₘₐₓ and dividing the result thereof by 2 to obtain the upper middle limit voltage value, but the invention is not limited thereto. The energy storage mode is entered, the recovered power of the power source 400 on the power grid is charged to the first energy storage device 10 of the lithium battery structure, and the controller 40 is triggered to issue an instruction to regulate the converter 30 to allow the recovered power of the power source 400 of the power grid to charge the first energy storage device 10 of the lithium battery structure via the second energy storage device 20 of the capacitor structure. The charging current is between 0 C and 1.0 C or other current values within the rated maximum charging current value of the first energy storage device 10 of the lithium battery structure, wherein C is used to represent the current used by the battery when charging or discharging. For example, for a battery with a rated capacity of 36 ampere hours, 1.0 C is 36 amperes, until the first voltage value V₁ of the first energy storage device 10 of the lithium battery structure reaches a first upper limit voltage value V₁ₘₐₓ set according to demand, preferably set to a charging cut-off voltage value, or, until the first current value I₁ of the first energy storage device 10 of the lithium battery structure reaches a first lower limit current value I₁ₘᵢₙ, and the first lower limit current value I₁ₘᵢₙ may be set to 0.2C, but the invention is not limited thereto. The controller 40 detects that the first current value I₁ of the first energy storage device 10 of the lithium battery structure reaches the first lower current value I₁ₘᵢₙ, and the controller 40 provides a control signal CS_{off} corresponding to the off state to the converter 30, so that the converter 30 is switched to the off state and does not perform charging. In this way, overcharging of the first energy storage device 10 of the lithium battery structure may be avoided. If the first energy storage device 10 of the lithium battery structure may not recover energy in time or reaches the first upper limit voltage value V₁ₘₐₓ, causing the second voltage value V₂ of the second energy storage device 20 of the capacitor structure to continue to rise to the second upper limit voltage value V₂ₘₐₓ, the energy regulation system 100 may limit the current input or optionally include an energy consumption device (not shown), such as a resistor, to prevent or consume the energy that may not be recovered in time.

The energy regulation system 100 of the invention also includes a power saving sleep mode. In the first embodiment, when the energy regulation system 100 of the invention supplies power to the power regulation system of the power grid, the discharge current of floating charge of the second energy storage device 20 of the capacitor structure is less than or equal to a preset current value, such as 50 mA, and enters a wake-up stage of the power saving sleep mode.

In the first embodiment, when the energy regulation system 100 of the invention supplies power to the power regulation system of the power grid, the controller 40 detects that the second voltage value V₂ of the second energy storage device 20 of the capacitor structure is lower than the reference voltage value V_{R}. Alternatively, when the energy regulation system 100 of the invention enters the wake-up stage of the power saving sleep mode, the controller 40 detects that the second voltage value V₂ of the second energy storage device 20 of the capacitor structure is lower than the second lower limit voltage value V₂ₘᵢₙ or the second voltage value V₂ is lower than the lower middle limit voltage value between the reference voltage value V_{R} and the second lower limit voltage value V₂ₘᵢₙ, and enters the energy transfer mode. The controller 40 controls the converter 30 to allow the first energy storage device 10 of the lithium battery structure to charge the second energy storage device 20 of the capacitor structure, using the first energy storage device 10 of the lithium battery structure as the power source. The controller 40 controls the converter 30 to transmit the output voltage V_{2crg} and the output current I_{2crg}, and discharges to supply power and to charge with a current between 0 C and 2.0 C or other current values within the rated maximum discharge current of the first energy storage device 10 of the lithium battery structure, until the second voltage value V₂ of the second energy storage device 20 of the capacitor structure reaches the reference voltage value V_{R}, thereby avoiding the first energy storage device 10 of the lithium battery structure from discharging with a large current, and thereby protecting the first energy storage device 10 of the lithium battery structure. Alternatively, the energy stored in the pre-stored energy area of the second energy storage device 20 of the capacitor structure and the power of the first energy storage device 10 of the lithium battery structure are discharged together with a current between 0 C and 2.0 C or other current values within the rated maximum discharge current value of the first energy storage device 10 of the lithium battery structure, to help meet the power demand of the power regulation system of the power grid. In this way, the discharge current of the first energy storage device 10 of the lithium battery structure may be effectively controlled, thereby extending the service life of the first energy storage device 10 of the lithium battery structure.

Referring to the second embodiment shown in FIG. 1, taking an electric vehicle as an example, the energy regulation system 100 of the second embodiment of the invention is substantially the same as that of the first embodiment, and the difference between the two is that: the power source 400 is any or a combination of a generator, a charging station, a mains power source, or a kinetic energy recovery system of an electric vehicle, and is used to provide the power needed by the energy storage system of the electric vehicle, and the load 500 is any or a combination of an electric motor or an electrical device of the electric vehicle; the second energy storage device 20 of the capacitor structure is directly electrically connected to the generator, the charging station, the mains power source, or the kinetic energy recovery system and the electric motor or the electrical device of the electric vehicle, respectively, the converter 30 is located between the first energy storage device 10 of the lithium battery structure and the second energy storage device 20 of the capacitor structure, and electrically connected to the first energy storage device 10 of the lithium battery structure and the second energy storage device 20 of the capacitor structure, respectively, and the controller 40 controls the converter 30 to transmit the output voltage and the output current.

In the second embodiment, the second energy storage device 20 of the capacitor structure is illustrated by taking a supercapacitor set as an example, and the supercapacitor set is electrically connected to the kinetic energy recovery system of the electric vehicle or the electric motor or the electrical device of the electric vehicle. When the kinetic energy recovery system outputs electric energy, that is, in the energy storage mode, the controller 40 provides the converter 30 with the control signal CS_{crg} corresponding to the charging control state, using the kinetic energy recovery system as the power source. The electric energy output by the kinetic energy recovery system is connected to the converter 30 via the supercapacitor set and then connected to the first energy storage device 10 of the lithium battery structure. The controller 40 controls the converter 30 to transmit the output voltage V_{1crg} and the output current I_{1crg} to charge the supercapacitor set, or to charge the first energy storage device 10 of the lithium battery structure via the supercapacitor set. The first energy storage device 10 of the lithium battery structure is used to store electricity. That is, the electric energy output by the kinetic energy recovery system may be directly absorbed and stored by the supercapacitor set, or recharged to the first energy storage device 10 of the lithium battery structure via the converter 30. When the supercapacitor set is out of power or needs to supply power to the electric motor or the electrical device of the electric vehicle, that is, in the energy transfer mode, the first energy storage device 10 of the lithium battery structure is used as a power source, and the controller 40 regulates the converter 30 to allow the first energy storage device 10 of the lithium battery structure to charge the supercapacitor set. Alternatively, the electric motor or the electrical device of the electric vehicle uses the first energy storage device 10 of the lithium battery structure and the supercapacitor set as the power source, allowing the first energy storage device 10 of the lithium battery structure to discharge the electric motor or the electrical device of the electric vehicle via the supercapacitor set. The first energy storage device 10 of the lithium battery structure provides the power needed by the supercapacitor set for self-consumption or supplying power to the electric motor or the electrical device of the electric vehicle. The occasional instantaneous inrush current or high current load of the electric motor is stored or supplied by the supercapacitor set to stabilize the power source quality of the power system.

In the second embodiment, the first energy storage device 10 of the electric vehicle lithium battery structure is formed by electrically parallel connected 6 sets of 15 lithium battery cells connected in series as an example. The first energy storage device 10 of the lithium battery structure formed by the series and parallel connection of the plurality of lithium battery cells is only an embodiment of the invention and is not a limitation of the scope of the invention. The first energy storage device 10 of the lithium battery structure of the invention may be any of a lithium (iron) battery, a ternary lithium battery, etc., or a series and/or parallel combination thereof. In the present embodiment, the charging cut-off voltage value of the lithium battery unit is 4.2 V, the rated voltage value is 3.6 V, the discharge cut-off voltage value is 3 V, and the capacity of each lithium battery set is 4.9 Ahr (ampere-hour). "Battery capacity" is a measure of the charge stored by the battery, generally in ampere-hours (Ahr). Therefore, the charging cut-off voltage value of the first energy storage device 10 of the lithium battery structure is 4.2 V × 15 = 63 V, the rated voltage value of the first energy storage device 10 of the lithium battery structure is 3.6 V × 15 = 54 V, the discharge cut-off voltage value of the first energy storage device 10 of the lithium battery structure is 2.8 V × 15 = 42 V, and the battery capacity of the first energy storage device 10 of the lithium battery structure is 4.9 Ahr (ampere-hour) × 6 = 29.4 Ahr (ampere-hour).

In the second embodiment of the energy regulation system 100 of the invention, when the energy regulation system 100 of the invention supplies power to the electric motor or the electrical device of the electric vehicle, the discharge current of floating charge of the supercapacitor set is less than or equal to a preset current value, such as 50 mA, and the system enters the wake-up stage of the power saving sleep mode.

When the energy regulation system 100 of the invention supplies power to the electric motor or the electrical device of the electric vehicle, the controller 40 detects that the second voltage value V₂ of the second energy storage device 20 of the supercapacitor set drops below the reference voltage value V_{R}. Alternatively, when the energy regulation system 100 of the invention enters the wake-up stage of the power saving sleep mode, the controller 40 detects that the second voltage value V₂ of the second energy storage device 20 of the supercapacitor set is lower than the second lower limit voltage value V₂ₘᵢₙ or the second voltage value V₂ is lower than the lower middle limit voltage value between the reference voltage value V_{R} and the second lower limit voltage value V₂ₘᵢₙ. In particular, the lower middle limit voltage value may be set by adding the reference voltage value V_{R} and the second lower limit voltage value V₂ₘᵢₙ and dividing the result thereof by 2 to obtain the lower middle limit voltage value, but the invention is not limited thereto. The energy transfer mode is entered, and the controller 40 controls the converter 30 to switch to the discharge control state CS_{diserg}, and the first energy storage device 10 of the lithium battery structure is used as the power source, allowing the first energy storage device 10 of the lithium battery structure to connect to the converter 30 to charge the supercapacitor set. That is, the controller 40 controls the converter 30 to transmit the output voltage V_{2crg} and the output current I_{2crg}, and charges the supercapacitor set to the reference voltage value V_{R}, and pre-stores the power in the pre-stored energy area of the second energy storage device 20 of the supercapacitor set. The first energy storage device 10 of the lithium battery structure discharges power and charges the supercapacitor set with a current between 0 C and 2.0 C or other current values within the rated maximum discharge current of the first energy storage device 10 of the lithium battery structure. Alternatively, the energy stored in the pre-stored energy area of the supercapacitor set and the first energy storage device 10 of the lithium battery structure are discharged together with a current between 0 C and 2.0 C or other current values within the rated maximum discharge current of the first energy storage device 10 of the lithium battery structure to help meet the power demand of the electric motor or the electrical device of the electric vehicle. By making the converter 30 discharge to float charge the supercapacitor set and the electric motor or the electrical device of the electric vehicle with a charging current between 0 C and 2.0 C, large current discharge of the first energy storage device 10 of the lithium battery structure may be avoided, thereby extending the service life of the first energy storage device 10 of the lithium battery structure.

In the second embodiment of the energy regulation system 100 of the invention, taking the working voltage of the electric motor as 42 V ± 10 V as an example, the rated working voltage of the electric motor is 42 V, and the second upper limit voltage value V₂ₘₐₓ is preferably set to the upper limit working voltage value of the electric motor minus a margin value. For example, the upper limit working voltage value of the electric motor of the present example is 52 V, and the margin value is 1 V, so the second upper limit voltage value V₂ₘₐₓ is 52 V - 1 V= 51 V, and the second lower limit voltage value V₂ₘᵢₙ is preferably set to the lower limit working voltage value of the electric motor plus the margin value. For example, the lower limit working voltage value of the electric motor of the present example is 32 V, and the margin value is 1 V. Therefore, the second lower limit voltage value V₂ₘᵢₙ is 32 V + 1 V = 33 V. Taking the second energy storage device 20 of a supercapacitor set as a capacitor structure as an example, in a floating charge mode, the reference voltage value V_{R} of the second energy storage device 20 is greater than or equal to the lower limit working voltage value of the load 500 and less than or equal to the upper limit working voltage value of the load 500. Alternatively, the reference voltage value V_{R} is the rated working voltage value of the load 500. In the second embodiment, the load 500 is an electric motor with a rated working voltage value of 42 V as an example, which is the reference voltage value V_{R} of the supercapacitor set, that is, the floating charge voltage value. When the controller 40 detects that the second voltage value V₂ of the second energy storage device 20 is lower than the reference voltage value V_{R}, the controller 40 enters the energy transfer mode, and the controller 40 controls the converter 30 to allow the first energy storage device 10 to charge the second energy storage device 20 until the second voltage value V₂ of the second energy storage device 20 reaches the reference voltage value V_{R}.

When the kinetic energy recovery system of the electric vehicle recovers electricity and the supercapacitor set stores the recovered electricity of the kinetic energy recovery system, the kinetic energy recovery system is used as the power source to charge the supercapacitor set and store the recovered power in the reserved energy storage area. When the voltage of the supercapacitor set continues to rise to the second upper limit voltage value V₂ₘₐₓ, that is, 51 V of the present embodiment, the voltage may be identified as the start point of mechanical brake intervention, and the controller 40 simultaneously turns off the kinetic energy recovery function of the electric motor. When the voltage of the supercapacitor set is decreased, for example, to less than or equal to 49 V, the kinetic energy recovery function of the electric motor is restarted. In another embodiment, the controller 40 detects that the second voltage value V₂ of the second energy storage device 20 of the supercapacitor set exceeds the upper middle voltage value between the reference voltage value V_{R} and the second upper voltage value V₂ₘₐₓ, wherein the upper middle limit voltage value may be set by adding the reference voltage value V_{R} and the second upper limit voltage value V₂ₘₐₓ and dividing the result thereof by 2 to obtain the upper middle limit voltage value. In the present embodiment, the upper middle limit voltage value may be set to (42 + 51)/2 = 46.5 V, but the invention is not limited thereto. The energy storage mode is entered, the recovered power of the kinetic energy recovery system is charged to the first energy storage device 10 of the lithium battery structure, and by triggering the controller 40 to issue an instruction to regulate the converter 30 to allow the recovered power of the kinetic energy recovery system to charge the first energy storage device 10 of the lithium battery structure via the supercapacitor set, the charging current is between 0 C and 1.0 C or other currents within the rated maximum charging current value of the first energy storage device 10 of the lithium battery structure. Taking the converter 30 with a boost charging current of about 0.5C as an example, until the first voltage value V₁ of the first energy storage device 10 of the lithium battery structure reaches the first upper limit voltage value V₁ₘₐₓ set to be higher than the first lower limit voltage value V₁ₘᵢₙ according to demand, preferably set to the charging cut-off voltage value of the lithium battery structure, or until the first current value I₁ of the first energy storage device 10 of the lithium battery structure reaches the first lower current value I₁ₘᵢₙ, the first lower current value I₁ₘᵢₙ may be set to 0.2C, but the invention is not limited thereto. The controller 40 detects that the first current value I₁ of the first energy storage device 10 of the lithium battery structure reaches the first lower current value I₁ₘᵢₙ, and the controller 40 provides the control signal CS_{off} corresponding to the off state to the converter 30, so that the converter 30 is switched to the off state and does not perform the charging action. In this way, overcharging of the first energy storage device 10 of the lithium battery structure may be avoided. If the first energy storage device 10 of the lithium battery structure still may not recover energy in time, causing the second voltage value V₂ of the second energy storage device 20 of the supercapacitor set to continue to rise to the second upper limit voltage value V₂ₘₐₓ, the energy regulation system 100 may optionally include a mechanical brake or energy consumption device (not shown), such as a resistor, to consume the energy that may not be recovered in time.

When the second energy storage device 20 of the capacitor structure is formed by a supercapacitor set parallel connected with 20 supercapacitors of 400F connected in series, the energy temporarily stored in the pre-stored energy area of the supercapacitor set under 42 V floating charge is 400F/20 × (42 V - 33 V) = 180 AS (ampere-seconds). In addition, the energy regulation system 100 may supply the electric motor of the electric vehicle with a discharge current of, for example, 2.0 C via the first energy storage device 10 of the lithium battery structure. The output current under instantaneous acceleration is 2 × 29.4 amperes = 58.8 amperes. Thus, before the supercapacitor set drops to the second lower limit voltage value V₂ₘᵢₙ, which is the working cut-off voltage value of 33 V, the energy regulation system 100 may supply a total of about 180 + 58.8 = 238.8 AS (ampere-seconds) of energy from the pre-stored power area and 2.0 C discharge, which is sufficient to support the electric motor to reach the acceleration requirement of 4.0 C = 4 × 29.4 = 118 amperes within 2 seconds. The instantaneous discharge current of the first energy storage device 10 of the lithium battery structure may be effectively reduced by at least about 2.0 C or more, thereby extending the service life of the first energy storage device 10 of the lithium battery structure. Although there is a surge current when the electric motor is discharged, due to the floating charge design of the energy regulation system 100, the reserved energy storage area may absorb the surge current generated during the startup or the operation of the electric motor.

When the second energy storage device 20 of the capacitor structure is formed by a supercapacitor set formed by parallel connected 20 supercapacitors of 400 farads connected in series, the supercapacitor set rises from the floating charge reference voltage value V_{R} to the second upper limit voltage value V₂ₘₐₓ. The recovered energy that may be stored in the reserved energy storage area is 400F/20 × (51 V - 42 V) = 180 AS (ampere-seconds), and the recoverable electricity is about 180 ampere-seconds × (51 + 42)/2 V = 0.0023 kilowatt-hours. Kilowatt-hour refers to 1 kWh. When used with a cruising range of 40 km, if 0.0023 kWh of electricity may be recovered each time the brake is applied, then after 50 brakes, the kinetic energy recovery system may recover about 0.1 kWh of electricity, which is about 6% of the kinetic energy recovery rate.

In the energy regulation system 100 of the invention, when the floating charge and discharge current of the supercapacitor set is less than or equal to 50 mA or other currents, the energy regulation system 100 enters a power saving sleep mode, wakes up at 10 milliseconds per second or the like in the wake-up stage of the power saving sleep mode, and when the second voltage value V₂ of the second energy storage device 20 of the supercapacitor set is lower than the lower middle voltage value between the reference voltage value V_{R} and the second lower voltage value V₂ₘᵢₙ, the setting of the lower middle voltage value thereof may be to add the reference voltage value V_{R} and the second lower voltage value V₂ₘᵢₙ and divide the result thereof by 2 to obtain the lower middle voltage value. Alternatively, the second lower limit voltage value V₂ₘᵢₙ is set as the lower middle limit voltage value, but the invention is not limited thereto. For example, when the second energy storage device 20 of the capacitor structure is formed by a supercapacitor set with 20 supercapacitors with a rated voltage of 2.7 V connected in series, the lower middle limit voltage value may be set to (42 V + 33 V)/2 = 37.5 V, or set to 33 V of the second lower limit voltage value V₂ₘᵢₙ, and then the energy regulation system 100 is woken to perform a floating charge action.

In the second embodiment, in the energy regulation system 100 of the invention, in the floating charge mode, the storage space of the reserved energy storage area between the reference voltage value V_{R} and the second upper limit voltage value V₂ₘₐₓ of the supercapacitor set is used as the supercapacitor set to store instantaneous charging power, so as to store the instantaneous power transmitted by the kinetic energy recovery system. At the same time, the energy stored in the pre-stored power area between the reference voltage value V_{R} and the second lower limit voltage value V₂ₘᵢₙ of the supercapacitor set is used as the power needed for instantaneous discharge of the supercapacitor set to supplement the instantaneous load power of the electric motor or the electrical device of the electric vehicle. The first energy storage device 10 of the lithium battery structure is used to store and provide electricity, and the supercapacitor set is used as a surge absorption device during the start, braking, and kinetic energy recovery of the electric vehicle to protect the first energy storage device 10 of the lithium battery structure. Therefore, the energy regulation system 100 of the invention has functions such as providing an instantaneous inrush current when the electric motor is turned on, storing a charging current recovered by the kinetic energy recovery system, and reducing the instantaneous acceleration power source current of the first energy storage device 10 of the lithium battery structure by about 2.0 C or more.

The energy regulation system 100 disclosed in the invention is used to store, balance, and transfer power between the first energy storage device 10 of the lithium battery structure and the power source 400 or the load 500. The energy regulation system 100 has a built-in controller 40 and a charging and discharging mechanism of the converter 30. Therefore, the functions of the energy regulation system 100 of the invention include absorbing the startup inrush current of the power source 400 or the load 500, storing the inrush current or the charging current of the power source 400, and effectively reducing the instantaneous discharge current of the first energy storage device 10 of the lithium battery structure of about 2.0 C or above under the instantaneous large current auxiliary power source of the second energy storage device 20 of the capacitor structure, avoiding large current charging or discharging of the first energy storage device 10 of the lithium battery structure, thereby achieving the object of protecting the first energy storage device 10 of the lithium battery structure.

The application of the energy regulation system 100 disclosed in the invention is not limited to the power regulation systems of electric locomotives, electric vehicles, and power grids, and the energy regulation system 100 itself may be combined with the first energy storage device 10 of the lithium battery structure to become one independent battery device, so as to protect and extend the service life of the first energy storage device 10 of the lithium battery structure. At the same time, the energy regulation system 100 meets the requirements of energy storage, voltage regulation, and large current, wherein the second energy storage device 20 of the capacitor structure performs voltage regulation to make the power source 400 or the load 500 more efficient and stable.

Lastly, it is emphasized that the constituent components disclosed in the above embodiments of the invention are only for illustration and are not intended to limit the scope of the present application. Replacements or changes of other equivalent components should also be covered by the claims of the present application.

## Claims

1. An energy regulation system, electrically connected to a power source, a load, and a first energy storage device of a lithium battery structure, and comprising:
a second energy storage device of a capacitor structure electrically connected to the power source or the load, wherein in an energy storage mode, the power source is used as a power source to charge the second energy storage device, or charge the first energy storage device via the second energy storage device, and in an energy transfer mode, the first energy storage device is used as the power source to charge the second energy storage device, or discharge to the load via the second energy storage device;
at least one converter electrically connected between the first energy storage device and the second energy storage device, transmitting an output voltage and an output current in the energy storage mode or the energy transfer mode; and
a controller used to detect a first voltage value and a first current value of the first energy storage device, or a second voltage value of the second energy storage device, wherein the second energy storage device respectively sets a second upper limit voltage value, a second lower limit voltage value, and a reference voltage value, the reference voltage value is between the second upper limit voltage value and the second lower limit voltage value, when the second voltage value of the second energy storage device is less than the reference voltage value, the first energy storage device is used as the power source to charge the second energy storage device to the reference voltage value, and the controller controls the converter to transmit the output voltage and the output current to avoid large current charging or discharging of the first energy storage device, thereby achieving an object of protecting the first energy storage device.

2. The energy regulation system of claim 1, wherein the load is a power regulation system, an electric motor, or an electrical device.

3. The energy regulation system of claim 1, wherein the power source is a power regulation system, a generator, or a kinetic energy recovery system.

4. The energy regulation system of claim 1, wherein the reference voltage value is a rated working voltage value of the load.

5. The energy regulation system of claim 1, wherein the reference voltage value is greater than or equal to a lower limit working voltage value of the load and less than or equal to an upper limit working voltage value of the load.

6. The energy regulation system of claim 1, wherein the second upper limit voltage value is an upper limit working voltage value of the load minus a margin value, the second lower limit voltage value is a lower limit working voltage value of the load plus the margin value, and the margin value is any value greater than or equal to zero.

7. The energy regulation system of claim 1, wherein when the power source charges the second energy storage device, when the controller detects that the second voltage value of the second energy storage device exceeds an upper middle limit voltage value between the reference voltage value and the second upper limit voltage, the controller adjusts the converter to allow the power source to charge the first energy storage device via the second energy storage device.

8. The energy regulation system of claim 7, wherein the reference voltage value is added to the second upper limit voltage value and a result thereof is divided by 2 to obtain the upper middle limit voltage value.

9. The energy regulation system of claim 1, wherein when the first energy storage device is charged by the power source via the second energy storage device, a charging current is between 0 C and 1.0 C until the first current value of the first energy storage device reaches a first lower limit current value.

10. The energy regulation system of claim 1, wherein the second energy storage device comprises a reserved energy storage area to provide energy storage needs for an instantaneous overload of the load, and a pre-stored energy area to provide power source needs for an instantaneous underload of the load, thereby avoiding large current charging or discharging of the first energy storage device and extending a service life of the first energy storage device.

11. The energy regulation system of claim 1, wherein during a wake-up stage of a power saving mode, the controller detects that the second voltage value of the second energy storage device is lower than the second lower limit voltage value or the lower middle limit voltage value between the reference voltage value and the second lower limit voltage value, and enters the energy transfer mode, and the controller controls the converter to allow the first energy storage device to charge the second energy storage device.

12. The energy regulation system of claim 11, wherein the reference voltage value is added to the second lower limit voltage value and a result thereof is divided by 2 to obtain the lower middle limit voltage value.

13. The energy regulation system of claim 1, wherein the first energy storage device charges the second energy storage device at a charging current between 0 C and 2.0 C until the second voltage value of the second energy storage device reaches the reference voltage value.
